Europäisches Patentamt

(19) European Patent Office

Office européen des brevets

(11) **EP 0 965 926 A2**

(12) **EUROPEAN PATENT APPLICATION**

(43) Date of publication:
22.12.1999 Bulletin 1999/51

(51) Int. Cl.$^6$: **G06F 17/30**

(21) Application number: 99109926.8

(22) Date of filing: 20.05.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: 17.06.1998 EP 98111051

(71) Applicant:
**International Business Machines
Corporation
Armonk, NY 10504 (US)**

(72) Inventors:
• **Leymann, Frank Dr.**
**71134 Aidlingen 2 (DE)**
• **Roller, Dieter Dipl.-Phys.**
**71101 Schönaich (DE)**

(74) Representative:
**Teufel, Fritz, Dipl.-Phys.
IBM Deutschland Informationssysteme GmbH,
Patentwesen und Urheberrecht
70548 Stuttgart (DE)**

(54) **Improved availability in clustered application servers**

(57) The present invention relates to a method of increasing the availability of an application executed by a computer system. More particularly, the invention relates to a method of increasing the availability of an application executed by one or more application clients and a multitude of application servers executing the same application.

The fundamental teaching comprises a multi-casting step wherein an application client is requesting execution of an application service by sending an identical application service request to a collection of N out of M application servers with $1 < N \leq M$ in parallel.

Within an application server, preceding the application service execution step, an "only-once" determination step is suggested, for determining whether an application service request must not be executed more than once without jeopardizing application consistency. For such a case the taught method provides "only-once" execution behavior.

FIG. 2

## Description

## 1 Background of the Invention

### 1.1 Field of the Invention

The present invention relates to a method of increasing the availability of an application executed by a computer system. More particularly, the invention relates to a method of increasing the availability of an application executed by one or more application clients and a multitude of application servers executing the same application.

### 1.2 Description and Disadvantages of Prior Art

Enterprises depend on the availability of the systems supporting their day to day operation. A system is called **available** if it is up and running and is producing correct results. The **availability** of a system is the fraction of time it is available. MTBF denotes the **mean time before failure** of such a system is denoted, i.e. the average time a system is available before a failure occurs (this is the reliability of the system). MTTR denotes its **mean time to repair**, i.e. the average time it takes to repair the system after a failure (this is the downtime of the system because of the failure). Ideally, the availability of a system is 1. Today, a system can claim high availability if its availability is about 99.999% (it is called fault tolerant if its availability is about 99.99% ). J. Gray and A. Reuter, "Transaction processing: Concepts and Techniques", San Mateo, CA: Morgan Kaufmann 1993 give further details on these aspects.

As outlined in further details by D. Loshin, "High performance computing demystified", Academic Press, Inc., 1994 and K. Hwang, Advanced computer architecture: Parallelism, Scalability, Programmability, PMcGraw-Hill, Inc., 1993 and J. Gray and A. Reuter, "Transaction processing: Concepts and Techniques", San Mateo, CA: Morgan Kaufmann 1993 the fundamental mechanisms to improve MTTR are based on "redundancy": The availability of hardware is improved by building clusters of machines and the availability of software is improved by running the same software in multiple address spaces.

With the advent of distributed systems techniques have been invented which use two or more address spaces on different machines running the same software to improve availability (often called **active replication**). Further details on these aspects may be found in S. Mullender, "Distributed Systems", ACM Press, 1993. In using two or more address spaces on the same machine running the same software which gets its request from a shared input queue the technique of warm backups is generalized by the **hot pool** technique; refer for instance to F. Leymann and D. Roller, "Building a robust workflow management system with persistent queues and stored procedures", in: Proc. Intl. Conf. on Data Engineering ICDE 98 (Orlando, FL, February 25-28, 1998).

Despite of all of these progress further improvements are urgently required supporting enterprises in increasing the availability of their applications and allowing for instance for electronic business on a 7 (days) * 24 (hour) basis; due to the ubiquity of world-wide computer networks at any point in time somebody might have interest in accessing a certain application server.

### 1.3 Objective of the Invention

The invention is based on the objective to increase the availability of an application executed by a computer system.

## 2 Summary and Advantages of the Invention

The objective of the invention is solved by claim 1. The method of increasing the availability of an application is executed by an application client (131) and a multitude of M application servers (101 to 118). Said application client is sending an application service request to an application server requesting execution of an application service of said application. The current invention proposes a multi-casting step (202) wherein said application client is requesting execution of an application-service by sending the identical application service request (121, 122, 123) to a collection of N of said application servers with $1 < N \leq M$ in parallel.

Traditionally, compute power is considered to be expensive by many people. Submitting or even performing one and the same request multiple times would not be a viable option for this community. But with the advent of cheap server machines that can be clustered together to ever increasing compute power the cost argument does not longer apply. Consequently, the core of our invention, namely cloning and sending request messages for higher availability does not have any cost obstructions. The advantage will be an improved availability of message based applications in clusters.

Moreover not only availability of an application but also response time for an application service may be improved. If an identical application service request is sent in parallel to multiple application servers automatically that application server, the "first" application server, with typically the lowest workload will pick up the application service request first. In case of application service requests to be executed once only the additional processing of other application servers to determine that the "first" application server has already executed that application service request is neglectable and does not result in a significant workload increase, if the other application servers abandon to process the application service request. In essence the current teaching also offers a kind of automatic workload balancing.

Due to the invention's flexibility availability of an application may be improved by hardware redundancy as well as by software redundancy.

Additional advantages are accomplished if in said multi-casting step the application client indicates (202) said application service request with a "once-only" mark indicating that the application service request is to be executed only once.

Based on this feature the current teaching may be applied to the all types of application services, those which may be executed multiple times without jeopardizing application integrity and those which may be executed once only. Moreover this "once-only" mark may be used by an application server to decide, if it has to determine that the requested application service is executed once only.

Additional advantages are accomplished by the teaching of an additional-application-service-execution step (206), wherein an addressed application server, being an application server of said application server collection, is executing said application service request.

Through this teaching an application server is actually enabled to also execute the requested application service.

Additional advantages are accomplished by the teaching of an only-once-determination step, preceding said application-service-execution step. Within said only-once-determination step in a first step (203) said addressed application server determines, if said application service request is to be executed once only. If said application service request is to be executed once only, in a second step (204) said addressed application server is checking whether said application service request has been executed already. If said application service request has not been executed yet, in a third step (205) said application service request is marked executed and said addressed application server proceeds with said application service execution step.

This teaching extends the current invention to support a "once only" execution behavior for an application service request.

Additional advantages are accomplished if in said first step said addressed application server determines by analyzing the type of said application service or said mark, if said application service request is to be executed once only.

Both of the suggested solutions to identify a "once only" application service request are attractive as they are easy to implement.

Additional advantages are accomplished if said second step is performed by retrieving from an application service request database (213) an indication, whether said application service request has been executed already. And in said third step said application service request is marked executed by storing a corresponding indication into said application service request database.

The proposed teaching solves the problem of how the application servers can signal each other that a certain "only once" application request has been executed already by one of these application servers. The suggestion to query a common database keeps communication overhead between the application servers minimal.

Additional advantages are accomplished by preceding said multi-casting step by an application server collection determination step (201) determining said application server collection. This application server collection might be determined by reading a profile (211) defining for said application client a set of associated application servers; this set of associated application servers or a subset thereof might then be used as the application server collection. Moreover said set of associated application servers could depend on the type of the application service; i.e. depending on the type of requested application service the set of associated application servers could be different. As a separate feature or in combination with the preceding teaching the application server collection might be determined by retrieving from an application server collection database (212) a set of currently active application servers. This set of currently active application servers or a subset thereof might be used as said application server collection.

Above teaching of determining an application server collection offers significant flexibility of how to determine an application server collection of application servers which will receive one of the duplicated application service requests. The application server collection can be determined even specific for every application client and/or every type of application service. An approach which is based on static information by reading profile information is beneficial due its low overhead, its easy implementation and high performance. An approach being based on dynamic information as the set of currently active application servers is beneficial as application service requests will be sent to application servers only, which are ready for service. Independent which of the teaching will be used they all have in common that they allow to control workload and performance across the set of application servers. In addition all of the approaches have in common that they are not limited to a certain policy; control may be exercised based on the distance between application client and application servers, importance and priority of application client and server etc..

Additional advantages are accomplished if the application servers each comprise a hot pool of one or a multitude of application instances, being executed in the same or a multitude of address-spaces, sharing an input queue. Additionally said application servers might executed on the same and/or a cluster of computer systems. Furthermore said application client and said application servers being executed on the same and/or different computer systems.

By virtue of this teaching the complete spectrum of hardware and software based redundancy approaches are made available for exploitation. The current teaching does not impose any restrictions on an implementation of the current teaching like the number of application instance, the number and location of application servers or number of address-spaces the application instances are executed in.

Additional advantages are accomplished by sending said application service request by a message via a messaging system with guaranteed delivery.

By exploiting a messaging system for delivery of an application service request automatically ensures message integrity. Once the application client sent the application service request via such a messaging system no further provisions have to be made by the application client against losses. All in all availability of the overall system is further increased.

## 3 Brief Description of the Drawings

Figure 1    is a diagram reflecting the current invention by visualizing an application client sending the same application service request to multiple application servers in parallel

Figure 2    is a summarizing overview on the proposed method in form of a flow diagram

## 4 Description of the Preferred Embodiment

If the current specification is referring to an application it may be on any nature not limited to any specific type or implementation. The terms application client and application server have to be understood from a logical point of view only relating to some type of "instance". These terms do not distinguish necessarily different address space or even different computer systems.

The current invention is assuming a certain communication path between application client and application server; this does not mean that the invention is limited to a certain communication paradigm.

Also if the current specification is referring to a "database" the term is to be understood in a wide sense comprising not only actual databases (like relational, hierarchical databases etc.) but also simple files and the like.

## 4.1 Introduction

Enterprises depend on the availability of the systems supporting their day to day operation. A system is called **available** if it is up and running and is producing correct results. The **availability** of a system is the fraction of time it is available. By MTBF the **mean time before failure** of such a system is denoted, i.e. the average time a system is available before a failure occurs (this is the reliability of the system). MTTR denotes its **mean time to repair**, i.e. the average time it takes to repair the system after a failure (this is the downtime of the system because of the failure). Then,

$$AVAIL = \frac{MTBF}{MTTR + MTBF}$$

is the availability of the system. Ideally, the availability of a system is 1 (i.e. MTTR=0 or MTBF=∞); today, a system can claim high availability if its availability is about 99.999% (it is called fault tolerant if its availability is about 99.99%). Thus, the availability of a system can be improved by making MTBF infinitely large (MTBF→∞) or by making MTTR infinitely small (MTTR→0). Since it is extremely costly to make MTBF very large, the focus in improving the availability of a system is on improving its MTTR.

The fundamental mechanisms to improve MTTR are based on "redundancy": The availability of hardware is improved by building clusters of machines and the availability of software is improved by running the same software in multiple address spaces. A technique found in many implementations (called **primary backup**) consists of building pairs of address spaces in which one is the primary address space performing the actual requests of its clients and the other is the backup address space taking over the processing of the primary in case the primary fails. When the primary sends very frequently state information to its backup (so-called "checkpoints"), MTTR usually can be made very small, in which case the notion **hot backup** is used, otherwise the notion **warm backup** indicates that some sort of failure detection is used to find out when the backup has to take over.

With the advent of distributed systems techniques have been invented which use two or more address spaces on different machines running the same software to improve availability (often called **active replication**). In using two or more address spaces on the same machine running the same software which gets its request from a shared input queue the technique of warm backups is generalized by the **hot pool** technique; a client sends a request to the input queue of one hot pool.

When hot pools with the same software run on different machines ("**cluster**") a client trying to send a request to a hot pool could detect that this hot pool has failed and could send it to another hot pool on a different server of the cluster. In doing so, clients (be it application clients or client of the messaging system) could implement takeover between hot pools themselves.

## 4.2 Uncertainty of the State of the Failed Request

The problem with this is the uncertainty of what happened to the request sent to the hot pool detected to have failed: Due to the reliability of the messaging system (with guaranteed delivery) it is known that the request sent has arrived in the hot pool's input queue. But it is unknown whether or not it is already processed or whether it will be processed when the server hosting the failed hot pool recovers - because each member in the hot pool ensures message integrity no other situation can occur, i.e. either the request is already processed or the corresponding message is still in the input queue. Consequently, when the takeover mechanism switches to another hot pool the requests sent (and acknowledged by the messaging system) to the failed hot pool cannot be simply resubmitted to the new hot pool without taking care that the requests are not executed twice: The time it takes to restart the failing hot pool and to perform the outstanding requests in its input queue can be observed by the request submitter and thus directly contributes to the downtime of the system, i.e. its MTTR and unavailability.

**4.3 The Solution**

The current invention is based on a mechanism to improve the availability of services provided by application servers by reducing the meantime to repair of failing application servers. By this, as it will be clear evidently, the services can be provided close to a 7x24 basis.

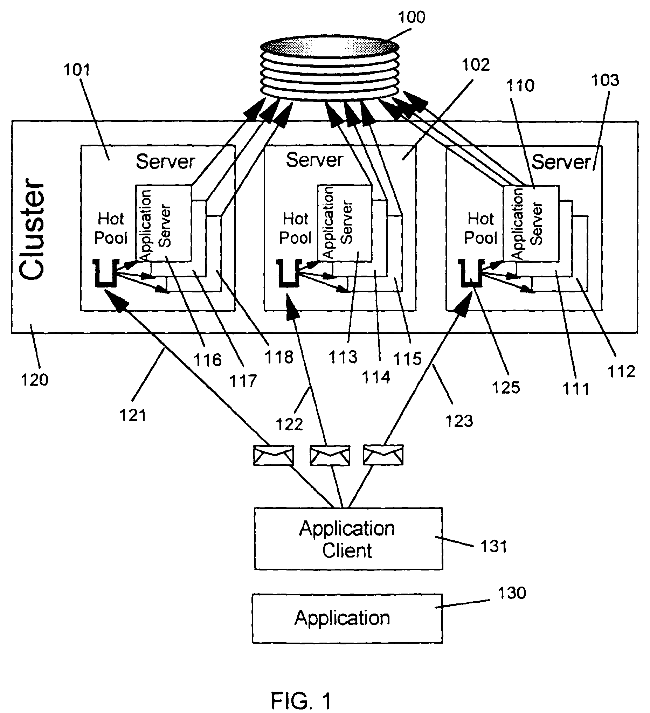

Based on this approach the central idea of the current invention is: When hot pools are built **with request multi-casting** in mind the availability of the overall environment is increased; i.e. an application client has to copy the message representing a particular request and has to send the identical request to multiple input queues concurrently. The input queues may reside on the same and/or multiple server systems and may provide the application service requests to one or a multitude of application server instances executing in the same or different address spaces. To explain this idea in more details we use the following terminology which is also depicted in Figure 1.

An **application server** (110, 111 or 112) is an executable implementing a collection of related services. A **hot pool** (110, 111, 112) is a collection of address spaces each of which runs the same application server and each of these application servers receive requests from an input queue (125), which is shared between the hot pool members. By a **server (101, 102 or 103)** we mean a certain physical machine which hosts a hot pool of application servers. A **cluster** (120) is a collection of servers which fail independently and each server hosts a hot pool of application servers of the same kind.

Applications (130) request services from application servers via application clients. An **application client** (131) is an executable which runs on the same machine as the application and which communicates with a server on behalf of the application. If the communication between the application client and a server is based on (asynchronous) reliable message exchange, the application server is said to be **message based**. In what follows we do assume message based communication between application clients and application servers. Consequently, an application client requests the performance of a certain service by sending a corresponding message into the input queue of a hot pool of associated application servers on a particular machine.

**4.3.1 Request Multi-Casting**

By request **multi-casting** we denote the following proceeding: When the application requests the execution of a particular service, the application client duplicates the corresponding request message and sends it to multiple servers in parallel. For this purpose the application client selects a subset of N, $1<N\leq M$, servers from the set of all M servers building the cluster, addresses the copied request message to each of the selected servers, and hands the message to the messaging system. For N=M the term **broadcasting** is common.

This basic idea is visualized within Figure 1 showing a certain application service request duplicated and then sent (121, 122, 123) as a multitude of identical application service request to a collection of application servers.

**4.3.2 Determining Target Servers**

Depending on the flexibility required different techniques can be used to determine the collection of servers to which the request message should be sent in parallel:

- Via profiling each application client can be associated with a set of servers. From this set the application client can make its choice, i.e. it can send the request message to all specified servers or to only a subset of them. This subset can be fixed for all requests, or it can vary from request to request.
- The application client can retrieve from a "cluster database" the necessary topology information, i.e. which servers build the cluster. This "topology lookup" can be done when the application client is started, or it can be done for each request. Doing it for each request allows to consider even servers that have been hot plugged in recently.

**4.3.3 Availability Versus Resource Consumption**

Based on assumption that servers within a cluster fail independently. Sending the same request message to more than one server of a cluster will improve the availability of the represented services: If P is the probability that a server will be unavailable, $P^n$ is

the probability that n servers of the cluster will be unavailable at the same time. So, if a cluster consists of m server hosting a hot pool of a particular kind a client can choose the degree of availability it needs by appropriately choosing the number $1 < N \leq M$ of replicated messages to be send in parallel to N different servers.

Sending $N > 1$ messages in parallel will consume more resources than sending a single message: The message has to be carried forward through the network, i.e. the message load on the network will increase. For certain requests (see "Consistency In Multi-Casting" below) the application servers processing the request have to perform additional operations for ensuring consistency; this will contribute to CPU consumption or even to additional database manipulations. So, there is a price to pay for the increased availability (which is the case in all mechanisms for improving availability).

### 4.3.4 Consistency in Multi-Casting

Each message sent by an application client requests some actions from a server and these actions will typically have some effects: For example, requesting an address change will result in an update of some fields in a database, requesting a report results in running a query, requesting the solution of an equation results in running an algorithm that produces some numbers, requesting to print a document results in producing some paper, or requesting to dispense money at an automatic teller machine will result in moving bank notes from one location to another.

Some of the effects must only be applied **exactly once**, some others may be applied multiple times without jeopardizing the consistency of the application:

- Requesting the same address chance many times will result in overwriting a field in a database many times with the same value, i.e. consistency is not violated.
- Requesting a report many times will perform the corresponding query many times producing the same report (ignoring intermediate updates for the moment), i.e. consistency is not violated.
- Solving a particular equation many times will always produce the same results, i.e. no consistency issues are here.
- Whether printing a document many times will result in consistency problems depends on the kind of document: Printing a trip report many times will not hurt, printing a cheque many times violates consistency.
- A request to dispense money must be performed exactly once, i.e. performing the same request many times definitively destroys consistency.

### 4.3.5 Ensuring Consistency In Multi-Casting Environments

Consequently, in sending out the same request message multiple times the client either must be sure that the environment will take care that from an application point of view the same effects will result as if only a single message was send, or the client indicates that performing the same request multiple times will not hurt. The first case means that application servers have to be build with request multi-casting in mind, i.e. they have to check whether or not the represented request has already been performed (by an application server of a different hot pool). The second case means that the corresponding request is "repeatable".

From an application server perspective the application client has to indicate whether or not a request is repeatable (whether the application client in turn gets a corresponding indicator from the application or whether it has enough knowledge to decide this by its own is not important for this invention). If a request is flagged as "repeatable" the receiving application server can perform the corresponding actions immediately. i.e. without any further impact on its usual behavior. If a request is not repeatable, the receiving application server must check whether the corresponding actions have already been performed or not. If the actions have already been performed the application server ignores the request and continues with a new request; otherwise, the requested actions are performed.

Various mechanisms exist to enable an application server to detect that a request has already been performed, for example: Each request message may contain a unique request identifier. The identifiers of all requests already performed or currently under processing are persistently stored in a database (100) which is accessible by all application servers within the cluster. Before executing the actions associated with a request the performing application server checks the existence of the request identifier in this database; if it is already there the request will not be performed a second time, otherwise, the identifier is inserted into this database and the actions corresponding to the request can be executed. Garbage collection of the request identifiers stored can be done based on a protocol that limits the maximum lifetime of request messages within the messaging system (e.g. in MQSeries the maximum lifetime of each message can be set): Request identifiers can be discarded from the database if they are elder then the maximum lifetime of the associated message, because all messages with the corresponding request identifier will be discarded by the messaging system, i.e. no application server will ever retrieve this request message.

### 4.3.6 A Summarizing Review on the Proposed Method

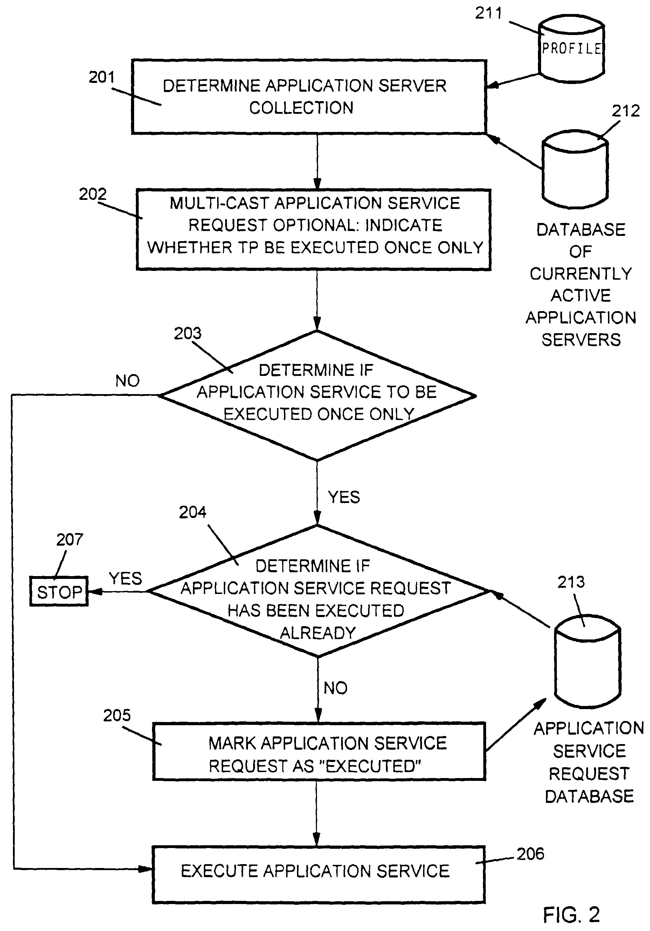

Figure 2 gives a summarizing review on the proposed method in form of a flow diagram.

Within step (201) of the proposed method the application client determines a collection of application servers to be used in the next step (202). The set comprises those application servers to which the application client will send an application service request later on. The invention suggests various possibilities which can be used separately or in combination:

- A profile (211) could store for that particular application client the application server collection.
- Based on the type of application service request a different profile might be defined.
- As soon as an application server joins the cluster it stores its identity into a database (212) of currently active application servers. The application client is retrieving these application server identities and may use it (or a subset of it) as application server collection.
  This approach may be combined with above mentioned profile approach. In this case only those application servers of the profile which are up and running will receive an application service request.

In step (202) the application client requests the identical application service, not only from one application server but from a multitude of application servers in parallel by a multi-cast application service request. In case of certain application service requests the consistency of the application may be jeopardized if the identical application service is executed more than once. In case of other application service requests multiple execution of the same application service requests will not hurt application consistency. For this reason within step (202) the application client may indicate whether the application service request is to be executed once only.

Within step (203) an application server which received the application service request determines whether the current application service request is of the "once only" nature. If the multiple execution of the current application service request does not jeopardize the application consistency (NO-path within Fig. 2) the requested application service may be executed.

In case that the current application service may be executed once only (YES-path within Fig. 2) in step (204) the application server determines if the application service request has been executed already. The invention teaches to retrieve from a application service request database (213) whether another application server marked the current application service request as "executed" already in that database. If the result is that the application service request has been executed already (YES-path within Fig. 2) the application server will stop (207) processing of the application service request not executing that application service.

If on the other hand the application server found out that the application service request has not be executed yet (NO-path within Fig. 2) it will mark the application service request as "executed" within the application service request database (213) and execute the requested application service in step (206).

### 4.4 Advantages

Traditionally, compute power is considered to be expensive by many people. Submitting or even performing one and the same request multiple times would not be a viable option for this community. But with the advent of cheap server machines that can be clustered together to ever increasing compute power the cost argument does not longer apply. Consequently, the core of our invention, namely cloning and sending request messages for higher availability does not have any cost obstructions. The advantage will be an improved availability of message based applications in clusters.

Moreover not only availability of an application but also response time for an application service may be improved. If an identical application service request is sent in parallel to multiple application servers automatically that application server, the "first" application server, with the lowest workload will pick up the application service request first. In case of appliocation service requests to be executed once only the additional processing of other application servers to determine that the "first" application server has already executed that application service request is neglectable and does not result in a significant workload increase, if the other application servers abandon to process the application, service request in that case. In essence the current teaching also offers a kind of automatic workload balancing.

Due to the invention's flexibility availability of an application may be improved by hardware redundancy as well as by software redundancy.

### 5 Acronyms

**MTBF**  Mean-Time Between Failure
**MTTR**  Mean-Rime to Repair

### Claims

1.  A method of increasing the availability of an application executed by a computer system

    said method being executed by an application-client (131) and a multitude of M application-servers (101 to 118), and

    said application-client sending an application-service-request to an application-server requesting execution of an application-service of said application,

said method being characterized by the following steps:

a multi-casting step (202) wherein said application-client is requesting execution of an application-service by sending a same application-service-request (121, 122, 123) to an application-server-collection in parallel comprising a collection of N of said application-servers with $1 < N \leq M$.

2. A method of increasing the availability of an application according to claim 1,

   wherein in said multi-casting step said application-client indicates (202) said application-service-request with a mark as to be executed only once.

3. A method of increasing the availability of an application according to claim 1,

   comprising an application-service-execution step (206), wherein an addressed-application-server, being an application-server of said application-server-collection, is executing said application-service-request.

4. A method of increasing the availability of an application according to claim 3,

   comprising an only-once-determination-step, preceding said application-service-execution step,

   wherein in a first step (203) said addressed-application-server determines, if said application-service-request is to be executed once only; and, if said application-service-request is to be executed once only,

   wherein in a second step (204) said addressed-application-server is checking whether said application-service-request has been executed already; and, if said application-service-request has not been executed yet,

   wherein in a third step (205) said application-service-request is marked executed and said addressed-application-server proceeds with said application-service- execution step.

5. A method of increasing the availability of an application according to claim 4,

wherein in said first step said addressed-application-server determines by the type of said application-service, if said application-service-request is to be executed once only.

6. A method of increasing the availability of an application according to claim 4 and 2,

   wherein in said first step said addressed-application-server determines by said mark, if said application-service-request is to be executed once only.

7. A method of increasing the availability of an application according to claim 4, 5 or 6,

   wherein said second step is performed by retrieving from an application-service-request-database (213) an indication, whether said application-service-request has been executed already, and

   wherein in said third step said application-service-request is marked executed by storing a corresponding indication into said application-service-request-database.

8. A method of increasing the availability of an application according to any of the preceding claims,

   wherein said multi-casting step is preceded by an application-server-collection-determination step (201) determining said application-server-collection.

9. A method of increasing the availability of an application according to claim 8,

   wherein said application-server-collection is determined by reading a profile (211) defining for said application-client a set of associated-application-servers; and

   using said set of associated-application-servers as said application-server-collection, or

   using a subset of said set of associated-application-servers as said application-server-collection.

10. A method of increasing the availability of an application according to claim 9,

    wherein said set of associated-application-servers depends on the type of said application-service.

11. A method of increasing the availability of an application according to claim 8,

wherein said application-server-collection is determined by retrieving from an application-server-collection-database (212) a set of currently active application-servers and using said set of currently active application-servers or a subset thereof as said application- server-collection.

**12.** A method of increasing the availability of an application according to any of above claims,

wherein said application-servers each comprise a hot pool of one or a multitude of application-instances, being executed in the same or a multitude of address-spaces, sharing an input queue; and/or

wherein said application-servers being executed on the same and/or a cluster of computer systems; and/or

wherein said application-client and said application-servers being executed on the same and/or different computer systems.

**13.** A method of increasing the availability of an application according to any of above claims,

wherein said application-service-request is being sent by a message via a messaging-system with guaranteed delivery.

FIG. 1

FIG. 2